Europäisches Patentamt

European Patent Office

Office européen des brevets

(11) Publication number: **0 069 525**
**B1**

(12) **EUROPEAN PATENT SPECIFICATION**

(45) Date of publication of patent specification: **16.04.86**

(51) Int. Cl.⁴: **G 06 F 9/44**

(21) Application number: **82303394.9**

(22) Date of filing: **29.06.82**

(54) Data processing system.

(30) Priority: **30.06.81 JP 102900/81**
**03.07.81 JP 104017/81**
**03.07.81 JP 104020/81**

(43) Date of publication of application:
**12.01.83 Bulletin 83/02**

(45) Publication of the grant of the patent:
**16.04.86 Bulletin 86/16**

(84) Designated Contracting States:
**DE FR GB SE**

(56) References cited:
**US-A-3 646 523**

**IEEE TRANSACTIONS ON COMPUTERS, vol.C-28, no.2, February 1979, New York (US) Y. CHU: "Architecture of a hardware data interpreter", pages 101-109**

(73) Proprietor: **FUJITSU LIMITED**
**1015, Kamikodanaka Nakahara-ku**
**Kawasaki-shi Kanagawa 211 (JP)**

(72) Inventor: **Hattori, Akira**
**c/o Fujitsu Limited Pat. Dept. 1015**
**Kamikodanaka**
**Nakahara-ku Kawasaki-shi Kanagawa 211 (JP)**
Inventor: **Hayashi, Hiromu**
**c/o Fujitsu Limited Pat. Dept. 1015**
**Kamikodanaka**
**Nakahara-ku Kawasaki-shi Kanagawa 211 (JP)**
Inventor: **Shinagawa, Akio**
**c/o Fujitsu Limited Pat. Dept. 1015**
**Kamikodanaka**
**Nakahara-ku Kawasaki-shi Kanagawa 211 (JP)**
Inventor: **Shinogi, Tsuyoshi**
**c/o Fujitsu Limited Pat. Dept. 1015**
**Kamikodanaka**
**Nakahara-ku Kawasaki-shi Kanagawa 211 (JP)**

(74) Representative: **Sunderland, James Harry et al**
**HASELTINE LAKE & CO Hazlitt House 28**
**Southampton Buildings Chancery Lane**
**London WC2A 1AT (GB)**

Courier Press, Leamington Spa, England.

## Description

The present invention relates to a functional language oriented data processing system such as a lisp (namely a list Processor) which processes symbols or codes in place of numerals, and particularly concerns a functional language oriented processor having a structure such that the environment in which functions are executed (that is, what are used as values of variables of functions) is stored as a stack structure in memory within the system.

A Lisp or list processor deals with binary tree lists.

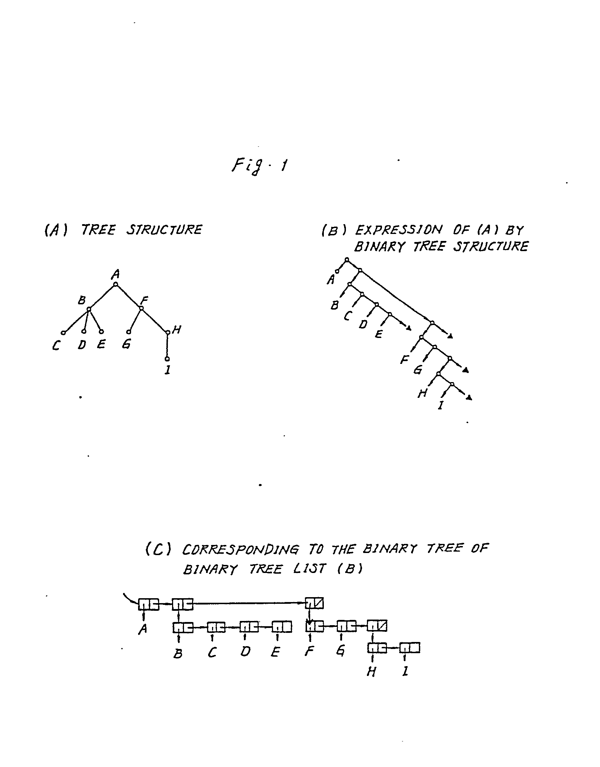

A tree structure expresses a relationship of codes or symbolic expressions as a gathering of nodes and branches, for example as shown in Fig. 1(A), which does not include closed loops.

Such a tree structure can be converted to a binary tree structure, as shown in Fig. 1(B), in which each node has two branches.

The binary tree structure of Fig. 1(B) is dealt with by the list processor as a binary tree list as shown in Fig. 1(C). The list, that is, the relationship of codes or symbols, is held in main memory as a number of list cells each of which cells is composed of one or two words of main memory and each of which cells has two (right and left) portions.

The left portion of a cell usually stores the bit pattern of a code or symbol, for example of letter A, whilst the right portion stores an address of a next code or symbol, to be connected to the code whose bit pattern is stored in the left portion of the cell, thus indicating the relationship of codes (the connection of cells).

The relationship or connection of the list cells of Fig. 1(C) realises the binary tree list of Fig. 1(B) in memory.

A Lisp is capable of obtaining a desired list structure by dynamically converting such a binary tree list structure by executing a List language using the processor.

In a list processor, programming involves defining functions by combining five basic functions which are necessary for converting binary tree lists, and values of such defined functions are obtained by program execution.

The five basic functions are as follows:—

a) car [X]

Having the value of a binary tree list located at the end of the left branch of a binary tree list X.

b) cdr [X]

Having the value of a binary tree list located at the end of the right branch of the binary tree list X.

c) cons [X:Y]

Having the value of a new binary tree list formed by providing a new list cell of which the left branch is taken to be a binary tree list X and the right branch is taken to be a binary tree list Y.

d) atom [X]

When X is atom this function is True (indicated by "T" or "*T*"), otherwise it is False (indicated by atom "NIL").

e) eq [X:Y]

When X and Y are the same binary tree list this function is True ("T" or "T*"), otherwise it is False (indicated by "NIL").

For example, to find the value f(2, 3) of mathematical function $f(x, y)=x^y+y^x$, the following programming function is defined

$$f=\lambda[[X, Y]; X^Y+Y^X]$$

To evaluate f(2, 3) the program becomes

$$\lambda[[X, Y]; X^Y+Y^X] [2, 3]$$
$$(=2^3+3^2)$$

When $f(x, y)=x^y+y^x$, a value of f(2, 3) becomes as follows, $\lambda[[X, Y]; X^Y+Y^X] [2, 3]=2^3+3^2$ by $f=\lambda[[X, Y]; X^Y+Y^X]$.

Here, (X, Y) or [X, Y]) indicate variables which are called the formal arguments of the defined function f and (2, 3) or [2, 3] indicate present values of (X, Y) which are called the actual arguments of the defined function f. Substitution of actual arguments (2, 3) into formal arguments (X, Y) is called binding and obtaining values of functions by binding actual arguments to formal arguments (in the above example formation of wanted list of $2^3+3^2$) is achieved by operation of the Lisp.

In a Lisp, namely in a functional language oriented processor, the binding of formal arguments and actual arguments is an important consideration.

In a processor to which the present invention is applied, a value of a variable (the actual argument to be substituted into a formal argument) is stored in a pair, which consists of the variable name and the value (the bind value) in a linear list (environment list) which is effectively a FILO (First In Last Out or Push down Pop up) type stack. The sequence of pairs (variable name/value pairs) in the list or stack is the same as the sequence in which functions having the relevant variables as arguments are used. Such a method of forming the environment in which functions are executed is generally called dynamic scoping. When reference to a value of a variable is required, pairs are sequentially retrieved, as the basic operation, from the heading or start of the list or stack; that is, starting with the most recently bound pair and progressing in sequence through less and less recently bound pairs. This is called Deep Bind type variable binding.

In general, the program structure and the execution mode of a functional language are as illustrated in Fig. 2.

A program is structured of functions.

Each function may have a formal argument (or a number of formal arguments) which may itself be a function.

In Fig. 2, a function F1 has a function F2 as an argument, whilst F2 in turn has a function F3 as an argument.

When the program is executed, each function is applied to its argument(s)—this is a "call"—and yields—this is a "return"—a value.

Thus, in Fig. 2, the function F1 calls F2 which calls F3. F3 returns a value to F2, which returns a value to F1, so that F1 is itself evaluated.

When a function (e.g. $f=\lambda[[X, Y]; X^Y+Y^X]$) is called (started) actual arguments (e.g. (2, 3)) are combined, namely bound to formal arguments (e.g. X, Y)) of the function, and the called function executes specified procedures by referring to the actual arguments in the environment, and a value of the function (e.g. $(2^3+3^2)$) is returned to the calling side.

However, other "side effects" (changes in the environment) are not caused.

Explanation of "side effects" is omitted here because it is not directly related to the subject matter of the present invention.

When calling a function, either of two methods of binding an actual argument to a formal argument can be used. These methods are known as the deep bind method and the shallow bind method.

As explained above, the deep bind method involves an environment structure such that pairs (e.g. X forms a pair with 2, while Y forms a pair with 3) of variable names—formal argument names (X, Y) and values—actual arguments—(2, 3) are stored in the form of a stack structure as a linear list. The variables (the pairs) are referred to in sequence starting with the variable (pair) bound most recently. The first found value (actual argument) of a variable (formal argument) is used for processing.

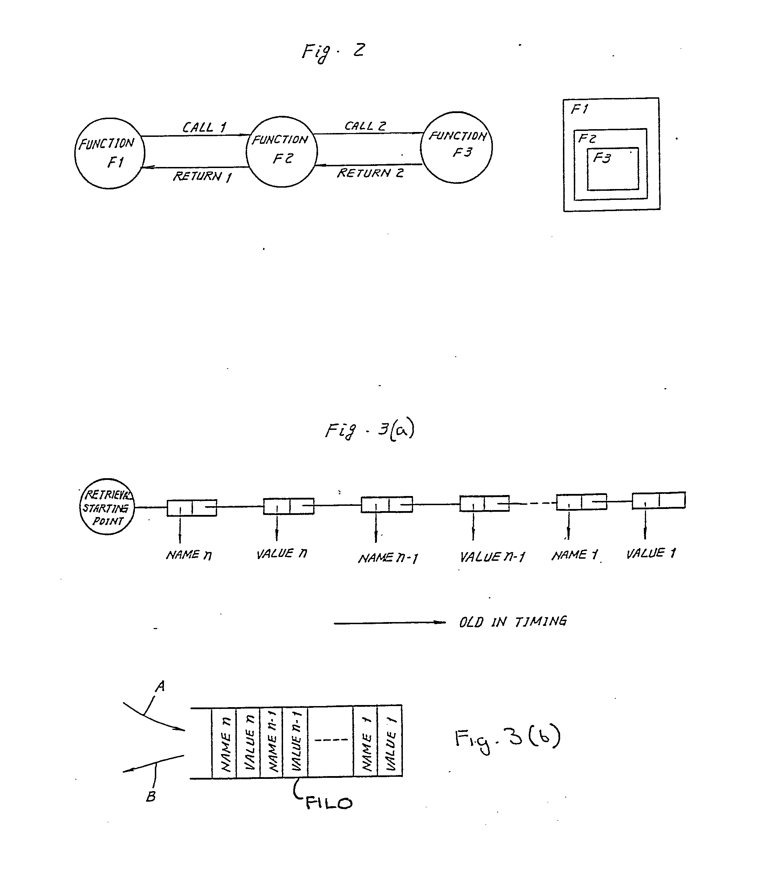

Namely, in the deep bind method, as illustrated in Fig. 3(a), a word (main memory storage unit) is divided into right and left portions forming a cell. The left portion of one cell stores a variable name, whilst the right portion stores the address of a next cell to be connected to the one cell and holding the value of the variable. Thus, the value of the variable is detected from the next cell.

When there are many variables (i.e. variable names and values) cells are connected in a list as shown in Fig. 3(a) and it can be seen that the resulting cell structure is equivalent to a FILO type stack FILO as illustrated in Fig. 3(b).

When binding a value—actual argument—to a variable—formal argument—while calling a function, name/value pairs are referred to in a direction away from a point at which retrieval of the environment list (or environment stack) is started.

As new items (new pairs) are added to the list or stack the retrieval start point is updated to the header address of the newly added items.

In the main memory cell arrangement shown in Fig. 3(a), addition of a new item (a new name/value pair n+1) corresponds to the provision of new (n+1) cells at the heading area of the list, connected to a previous n cell.

In terms of the FILO stack FILO of Fig. 3(b), addition of a new item corresponds to a push operation A for the stack, to enter a value n+1 and a variable name n+1, at the end of the stack to which accesses are made.

It will thus be seen that the arrangement of Fig. 3(a), name/value pairs are connected in sequence, with the oldest established (least recently bound) pair most remote from the retrieval start point.

In terms of fig. 3(b) the oldest pair is most remote from the end of the stack FILO to which access is made.

When a function returns a value, execution of the specified processing involving retrieval of a name/value pair, the pair concerned is retrieved from the cell arrangement of Fig. 3(a) (and equivalently popped from the stack FILO of Fig. 3(b)).

When the pair concerned is the n+1 pair, this means that a retrieval start point is returned to the condition which it had before the function requiring the n+1 pair was called i.e. to the condition shown in Fig. 3(a), with the pair n at the heading area of the cell arrangement (the pair n+1 having been extracted).

In terms of Fig. 3(b) the pair n+1 (variable name n+1 and value n+1) is taken out of the stack FILO by a pop operation B.

The deep bind method has the advantage that the push-pop stack operation effectively involved is simple, so that overhead of bind processing (i.e. binding a variable name or formal argument to a value or actual argument) at the time of calling a function and the overhead of unbind processing at the time of returning a function are comparatively small.

However, this method has the disadvantage that relatively long time is required for referring to a variable (a name/value pair) which was bound a considerable time ago, namely a variable deep in the stack.

That is, if a called function requires retrieval of a pair (e.g. name 1, value 1) which was bound at an old timing in the past, all the more recently bound pairs must first be referred to in sequence to allow retrieval of the required pair.

In terms of Fig. 3(b), a pair deep in the stack must be retrieved.

A global variable (also called a free variable) is likely to be deep in the stack.

In the shallow bind method, a random access area (called a value cell) is provided for each variable (formal argument) in order to hold a value (actual argument) of the variable. The actual argument is stored in the value cell of the variable at the time of calling a function; values (actual arguments) which have previously been stored in the value cell are stored as name and old value pairs in a linear list (or stack). Variables can be referred to only by reading the corresponding value cell, and an old value which has been stored in the linear list (or stack) is returned to the value cell of variable at the time of returning the calling function. The shallow bind method has an advantage in that a variable referring time is comparatively short, but has a disadvantage in that the overhead of bind processing at the time of calling a function and the overhead of unbind processing at the time of returning a function are comparatively large.

As explained above, the deep bind method is better than the shallow bind method in terms of the rate of bind/unbind processing, but can require a longer time for reference to some variables, particularly to global variables. Namely, in the deep bind method variables are referred by a sequential method in which a pointer (pointing to variables) is reduced one by one, thus requiring a longer processing time.

According to the present invention there is provided a functional language oriented data processing system having a program structure in which an actual argument is bound to a corresponding formal argument of a function to be called by storing as a pair the formal argument name and the actual argument in an environment which is arranged as a first-in-last-out type stack, and having an execution mode in which a called function executes processing using as the value of a variable of the function the actual argument given by the most recently stored pair containing a formal argument name the same as the name of the variable, and in which when a function is returned any stored pair in the environment containing the name of a formal argument of the function is deleted from the environment, characterised in that

the system includes an associative buffer memory operable to store entries each containing a variable name and data indicating the value of the variable whose name is contained in the entry, accessible using variable names as key, and is operable,

(A) when a function is called, to access the buffer memory using as key the variable name of a variable of the function, the value of the variable being obtained from the buffer memory entry containing the variable name if such an entry containing the variable name is present in the buffer memory, and is operable,

(B) when the function is called, if the variable name is not contained in any entry in the buffer memory, to search the environment and to obtain the value of the variable from the most recently stored pair in the environment which contains the variable name,

and is operable,

(C) when the function is returned, to invalidate any entry in the buffer memory containing a variable name which is the name of a formal argument of the returned function.

An embodiment of the present invention can provide for curtailment of the access time required for referring to variable stored within a stack memory in accordance with a deep bind method in a functional language oriented processor.

An embodiment of the present invention can provide a data processing system having a program structure and an execution mode in which an actual argument is bound to a formal, argument of a function to be called by storing as a pair the variable name of the formal argument and the value of the variable (the actual argument) in a First-In-Last-Out type stack memory which provides the environment in which functions are executed, and in which a function when called is executed using the most recently bound pair in the environment containing the name of a variable of the function to obtain a value of the variable, and in which when a function is returned pairs containing names of the formal argument variables of the function are deleted from the environment. An associative buffer memory is provided externally to the stack memory, and at least variable names and location information of variable values on the environment (the stack) are stored in this associative buffer memory.

Reference is made, by way of example, to the drawings, in which:

Figure 1 explains a binary tree list,

Fig. 2 shows program structure and execution mode of a functional language,

Figures 3(a) and 3(b) explain a deep bind method,

Figure 4 explains the deep bind method on a stack,

Figure 5 explains an environment list,

Figure 6 shows the format of an associative buffer in a first embodiment of the present invention,

Figure 7 is the practical structure of an associative buffer memory and a counter in the first embodiment,

Figures 8(a) to 8(c) indicate processing flow in the first embodiment,

Figure 9 shows the block diagram of a data processing system of the first embodiment,

Figure 10 shows the format of a virtual buffer memory of an second embodiment of the present invention,

Figure 11 is a practical structure of an associative buffer memory in the second embodiment,

Figure 12 shows the format of a virtual buffer memory in a third embodiment of the present invention, and

Figure 13 is a practical structure of an associative buffer memory in the third embodiment.

First, a preliminary explanation of a data processing system to which an embodiment of the present invention can be applied will be given. This system uses a deep bind method with a list or stack FILO generally as explained above.

In the deep bind method using a list or stack, the following processings are carried out.

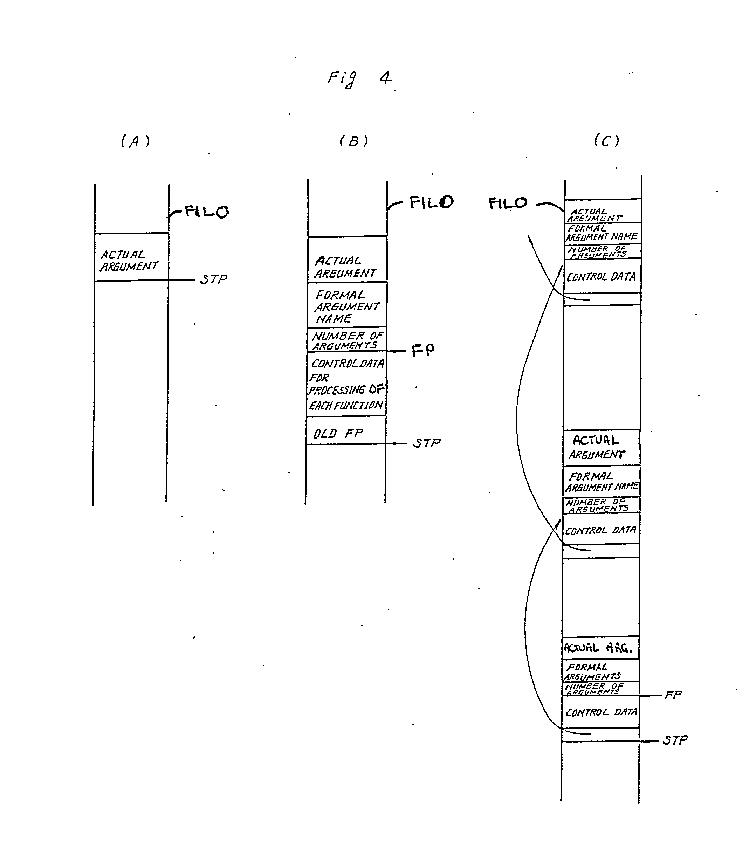

When an actual argument is prepared before calling a function, a stack FILO in the processor becomes as shown in Fig. 4(A). Here, STP is a stack top pointer. When the function is called the stack FILO changes and becomes as shown in Fig. 4(B) on the side of the called function.

That is, as shown in Fig. 4(A), when an actual argument (value of a variable) is prepared it is placed in the stack FILO with STP pointing to the "bottom" of the actual argument.

When a function is called, the formal argument name (the variable name)—to which the actual argument relates—is placed in the stack FILO, then an indication of the number of arguments is placed in the stack FILO, then control data for processing the function is placed in the stack FILO. Then a quantity 'OLD FP' is placed in the stack FILO.

The stack top pointer STP points to the bottom of the OLD FP.

A frame pointer FP points to the top (header) of the control data of the called function currently being executed.

OLD FP refers to the top (header) of control data of another function of this stack FILO.

As illustrated in Fig. 4(C) a number of functions can be linked through OLD FP.

When a variable required for the called function has been bound in a linked function as identified by the OLD FP's, above the called function in the stack FILO, the bind value of the variable can be obtained.

In terms of the environment of name/value pairs, when a link between functions is specified, the bind value of the variable can be obtained by searching backwards through (referring to) the pairs in sequence as explained above.

For example, the following three functions are taken

$$F_1(z)=z^2+F_2(10)$$

$$F_s(x)=x^2+x+F_3(7)$$

$$F_3(x)=x^5+1+z$$

and it is taken that a value of $F_1(3)$ is to be obtained.

When calling the function $F_1(z)$, the formal argument z is bound to 3 and this bind relationship is stored on the environment list (the stack). However, since a value $F_2(10)$ of the function $F_2(x)$ is necessary for calculation of $F_1(z)$, the function $F_2(x)$ is called. At this time, the formal argument x is bound to 10 and this bind relationship is stored on the environment list. However, since a value of $F_3(7)$ of the function $F_3(x)$ is necessary for calculation of $F_2(10)$, the function $F_3(x)$ is called. At this time, the formal argument x is bound to 7, and this bind relationship is stored on the environment list. However, z of $F_3(x)=x^5+1+z$ is a global variable. That is, the variable (z) is not bound when $F_3(x)$ is called for obtaining a value $F_3(7)$ of $F_3(x)$ (it is not a formal argument or local variable of $F_3(x)$). But since z was bound to 3 at the time of calling the $F_1(z)$, it is searched that z is 3 by searching backward on the environment list.

Thus, first of all, a value of $F_3(7)=7^5+1+3$ is obtained, then a value of $F_2(10)=10^2+10+F_3(7)$ is obtained after returning to $F_2(x)$, then a value of $F_1(3)=3^2+F_2(10)$ is obtained after returning to $F_1(Z)$.

Thus, the functions $F_1(z)$, $F_2(x)$ and $F_3(x)$ are linked and the bound value of z for function $F_1(z)$ is employed for evaluating $F_3(x)$.

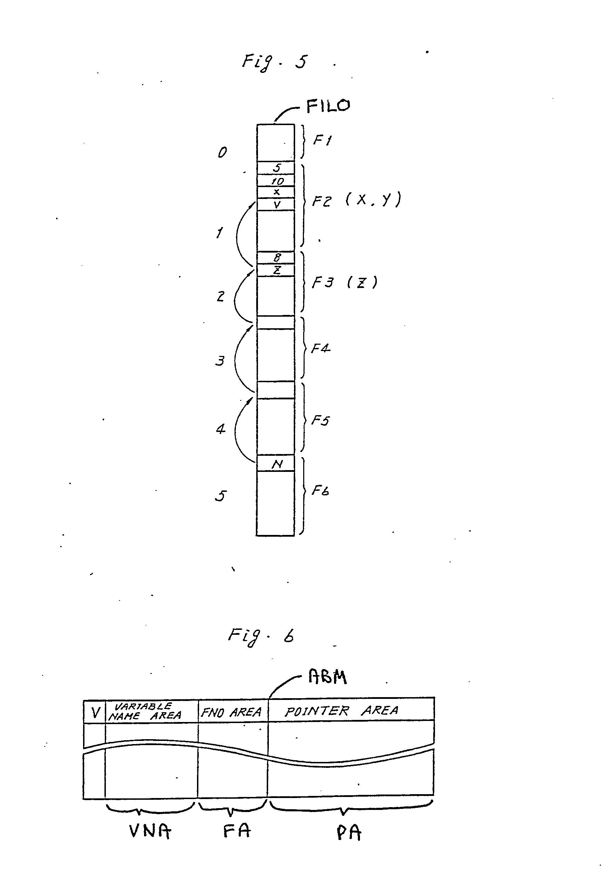

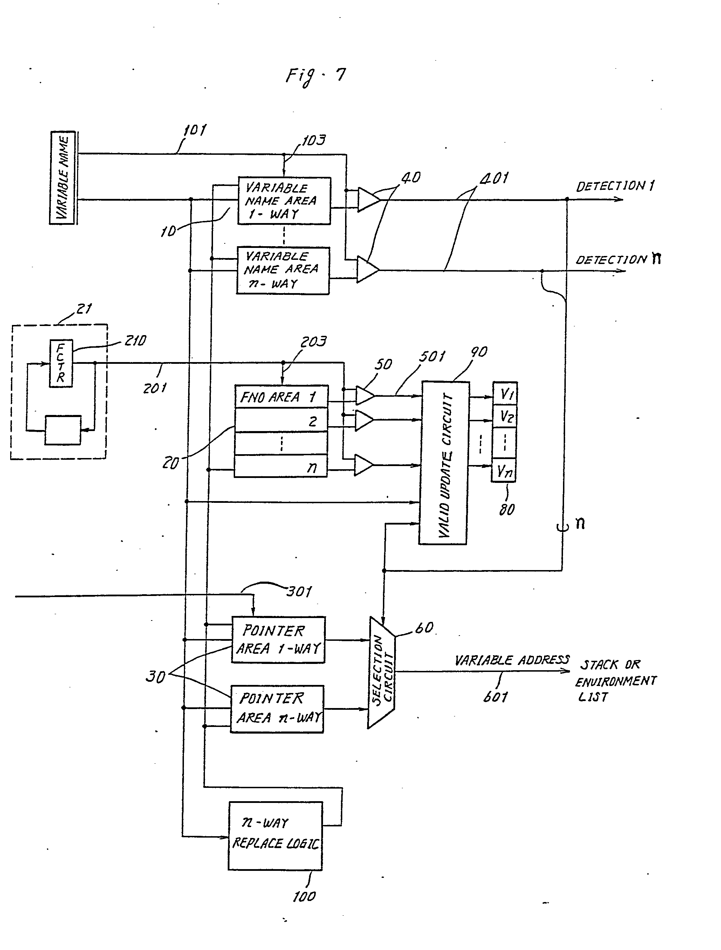

Fig. 5 illustrates an environment pertaining to functions F1 to F6.

It will be noted the F2 has x and y as its formal arguments, which are bound to actual arguments 5 and 10, whilst F3 has z as its formal argument, bound to actual argument 8.

In Fig. 5, it is assumed that $F_2$ is called by $F_1$, $F_3$ by $F_2$, $F_4$ by $F_3$, $F_5$ by $F_4$, and $F_6$ by $F_5$.

It is further assumed the function $F_6$ is as follows:—

$$F_6(N)=N^2+x+z+z^2$$

where, N is a local variable and x, z are global variables. Global variable Z is bound to x=5 when function $F_2(x, y)$ is called, whilst z is bound to z=8 when function $F_3(z)$ is called. In order to make reference to each variable of N, x and z in order to calculate a value of $F_6(N)$, the environment list or stack FILO is first searched. As a result, a value for local variable N (for example, N=10) can be found immediately but the values of x and z can be found to be 5 and 8 only after first searching through the environment list.

That is, x and z were bound to 5 and 8 when functions $F_2$ and $F_3$ were called. The name/value pairs giving this information will be buried in the environment list or stack under name/value pairs bound in respect of functions $F_4$ and $F_5$. To obtain the bind values 5 and 8 for x and z stack a serarch must be made, through progressively less recently bound pairs, deep into the stack.

This takes time and reduces processing speed.

In the present invention there is provided an associative buffer memory.

After a search as indicated above, to find the bind values of x and z a first time, the variable means (x and z) are registered in the associative buffer memory with information indicative of the relevant bind values (e.g. the bind values themselves or stack addresses of the bind values). The associative buffer memory is accessible using variable means as keys.

At a second time of referring to the variable names (x, z) the information indicative of the relevant bind values can be obtained from the associative buffer memory. This avoids the need for a second search of the stack. Thus, repeated references to global variables can be made more quickly, so that operations can be speeded up.

In general, the number of global variables is less than the number of local variables (or formal arguments) in a functional language oriented processor, but in general the global variables are often referred to. This means that the use of associative buffer in accordance with the present invention can be an effective measure.

The functions (operational abilities) of an associative buffer memory—a virtual buffer—provided in accordance with an embodiment of the present invention can be summarized as follows.

Practical structures of associative buffers of embodiments of the present invention will be explained afterwards.

(A) When an access is made for a first time to a global variable, at least the variable name and data (location data) concerning the location of the variable (the bind value of the variable) on the environment list (or stack) are stored in the buffer, in order to speed-up successive accesses to the global variable.

That is, the name of the global variable and at least information indicating the stack address of its bind value (possibly the bind value itself) as discovered in the first-access search of the stack are registered in the associative buffer.

(B) When a reference is made to the associative buffer, it is detected by hardware means whether or not a given variable name matches a variable name stored or registered in the buffer. In the event of a match the stack or environment list address corresponding to (the bind value of) the variable name is read from the buffer. That is, to provide bind value for the variable associative retrieval from the buffer is effected using the variable name as the key.

(C) The associative buffer has an ability to reset a validity indication bit V, provided in the buffer, of an entry in the buffer relating to a variable having the same name as that of a variable, that is a formal argument, of a called function, using the variable name as a key. This invalidates the entry in the buffer in that variable name. This is necessary for deleting global variables on the buffer in a case in which function having a formal argument (i.e. a local variable) of the same name as a global variable registered in the buffer is called after a reference to the global variable. If this is neglected, the rule of scoping which preferentially deals with local variables over global variables when making reference to variables in the same name is destroyed.

That is, if upon calling of a function it is detected that a formal argument of the function (i.e. a local variable or argument variable) has the same variable name as a global variable whose name is already entered in the buffer, the entry in the buffer in that variable name is invalidated and/or deleted.

This is necessary to allow a later-called function to have a formal argument whose name is the same as that of a global variable, whilst preventing a bind value of the global variable being taken erroneously as a bind value of the formal argument of the same name.

(After deleting of the entry in the relevant variable name from the buffer, a bind value for the formal argument will be provided by searching the environment list. Since this search starts with the most recently bound name/value pair, the bind value of the formal argument will naturally be found (and used) first (before the bind value for the global variable is found).

(D) Also provided is an ability to reset the validity bit V of all entries in the buffer having location data which matches location data pertaining to a returned function, using such location data on the environment list or stack as key.

In this sense the location data which is matched may be location data pertaining to variables (bind values of variables) on the stack, or may be location data identifying the returned function. Such data identifying the function, entered in the buffer, will be understood to identify all entries concerning argument variables of the function.

This ability is necessary, when a function returns to the calling side, for eliminating from the buffer all entries concerning argument variables (formal arguments or local variables) of the function being returned. If this were neglected, if a variable of the same name as that of a formal argument of a present function had been bound before the present function and a reference were made to the formal argument, a value (a bind value) from the buffer (which value will have been eliminated from the environment—the stack) relating to the earlier bound variable may be used erroneously.

That is, when returning a function, all entries in the buffer concerning (in the names of) formal arguments of the function are invalidated and/or deleted. Hence only entries concerning global variables are retained in the buffer for further use.

If each variable were not stored in the buffer together with location data as indicated above, it would be necessary to eliminate the possibility of such errors by invalidating entries in the buffer using each formal argument name of the function to be returned as the key, or all buffers would have to be cleared. The former procedure can be used but a longer time would be required. In latter case, the life of a global variable in the buffer would be limited to the period until a function referred for the first time is returned, almost negating the effect of buffer.

It will be understood that the associative buffer is concerned primarily with global variables (variables having values bound to them in earlier functions, which variables (and bind values) are necessary for evaluating later functions of which they are not formal arguments).

After a first reference to a global variable—for evaluating a function of which the global variable is not a formal argument—the global variable name and information identifying its searched bind value (the address of the bind value on the stack) are entered into the associative buffer.

Subsequent references to the global variable are speeded up because the bind value of the global variable can be obtained from the buffer using the name of the global variable as access key.

If a called function has a formal argument (a local variable or argument variable) of the same name as a variable in respect of which an entry is present in the buffer (i.e. a global variable), the entry in the buffer in this name is invalidated, to prevent erroneous use of the bind value of the global variable as a bind value of the formal argument.

When a function is returned, entries in the buffer concerning formal arguments (local variables or argument variables) of the function are deleted. This prevents an entry in the buffer in respect of a local variable of an earlier function being used in error to provide a bind value for a similarly-named local variable of a later function. In effect, only entries pertaining to global variables remain in the buffer after return of a function.

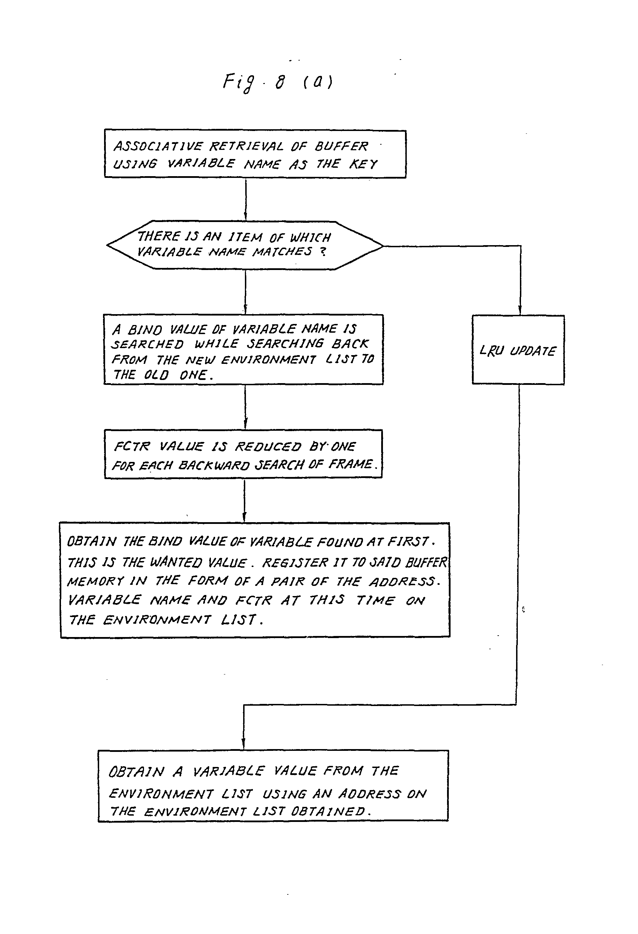

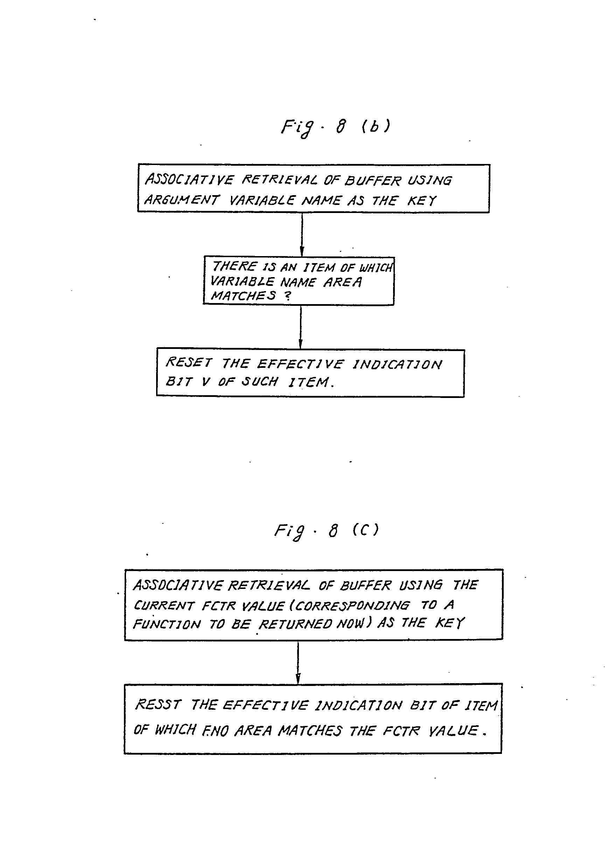

Figure 6 illustrates the format of an associative buffer memory ABM of a first embodiment of the present invention.

V is a validity display bit area, a VARIABLE NAME AREA VNA is used for registering variable names, an FNO area FA is used for storing data which indicates that all entries in the buffer having the same FNO area data concern variables which are arguments of the same function, a POINTER AREA PA is used for storing data giving environment list locations storing (bind) values of variables of the registered variable names (i.e. addresses on the stack).

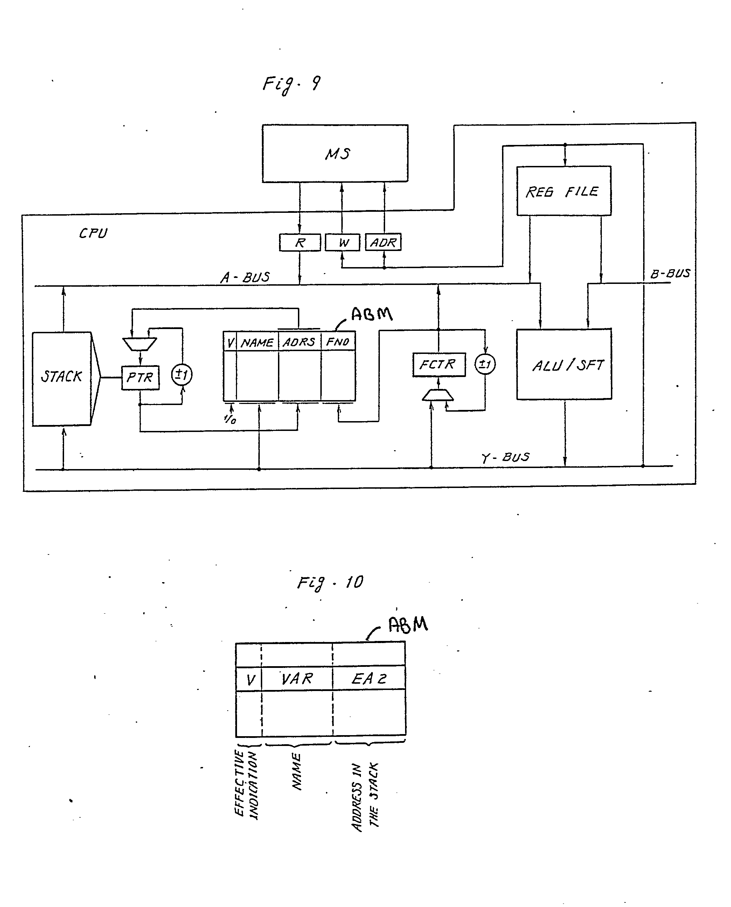

Figure 7 is a schematic block diagram illustrating the structure of the associative buffer memory ABM of the first embodiment of the present invention, together with a counter which increments or decrements by one for each function call or return, respectively.

In Fig. 7, memories 10, 20 and 30 are provided, each composed of registers or cells 1 to n. Memory 10 is a varaible name area memory for storing variable names in cells 1 to n. Memory 20 is an FNO area memory for storing values of counter means 21 having a counter FCTR 210 in cells 1 to n. The counter value in an FNO cell corresponds to the function having a variable as its argument the variable name of which is entered in the corresponding cell of the memory 10. Memory 30 is the pointer area memory storing addresses within the stack of bind values corresponding to variables whose variable names are entered in memory 10. The ith registers or cells (i=1, 2, ... n) of said memories 10, 20, 30 respectively correspond each other, forming one word.

When a certain variable within the environment list of the functional language oriented processor is accessed for a first time, the name of the variable (VARIABLE NAME), the count value of FCTR counter 210 at the time when the variable is found, and an address within the stack corresponding to the variable are respectively registered in memories 10, 20, 30 of the associative buffer memory, with a view to improving the speed of further accesses to the variable.

For registration into the associative buffer, a write pulse signal $WE_i$ (not illustrated) is actuated to write into an ith cell of the memory 10 a variable name (VARIABLE NAME) via variable name input lines 101, 103. Simultaneously, the current content of FCTR counter 210 is written into the ith cell of the FNO area memory 20 through input lines 201, 203 by activation of the write signal $WE_i$. In the same way, an address in the stack is written into the ith cell of the pointer area memory 30 from an input line 301 by activation of said write signal $WE_i$.

The associative buffer is able to detect whether a given variable name VARIABLE NAME matches a variable name previously registered in the memory 10 by means of a matching circuit 40. When a match is found one of $n$ output lines 401 of the matching circuit 40 is activated, controlling a selection circuit 60. Thus, the associative buffer outputs the content of a corresponding cell of the pointer area memory 30, namely an address within the stack (of a bind value corresponding to the variable name) on an output line 601. Namely, the address within the stack is read by associative retrieval using a variable name as the key.

The embodiment of Fig. 6 includes a validity indication bit storage cell group 80 and a validity update circuit 90, for resetting the validity indication bits V ($V_1$ to $V_n$) corresponding respectively to the $n$ cells of the FNO area memory 20 of the associative buffer using the content of counter FCTR 210 as the key.

The $V_i$ cell of the cell group 80, storing the validity indication bit V relevant to the ith FNO area cell is set by said write signal $WE_i$ (not illustrated) used for writing a variable name, and a stack address corresponding to the name, by means of valid update circuit 90.

When an output 501 of a matching circuit 50 is selected, when a counter content output 201 input to the memory 20 and an FNO area value stored in the memory 20 match, the corresponding validity indication bit is reset and the buffer entry to which the matching FNO area value pertains can be cleared using the FCTR value as the key.

A variable name is also applied to the n-way replace logic 100 and its output is connected to the inputs of memories 10, 20, 30.

The flowcharts of Figure 8 illustrates processings in the embodiment of Figs. 6 and 7. Fig. 8(a) is the flow chart of reference to and registration of variables in the buffer memory. Fig. 8(b) is the flow chart of deletion of buffer memory entries at the time of calling a function. Fig. 8(c) is the flow chart of deletion of buffer memory entries concerning argument variables upon function return.

As seen in Fig. 8(a), when a reference is made to the buffer using a variable name as key, it is determined whether the buffer has an entry in the variable name concerned.

If it has, LRU update takes place, and a variable value (bind value) is obtained from the environment list using an address obtained from the buffer entry.

If it has not, a bind value for the variable name is found by searching through the environment list or stack, starting with the most recent bound name/value pair, progressing towards the oldest bound pair.

As the search goes through progressively older bound pairs the FCTR counter value is reduced each time the search moves to a pair relating to a function of an earlier frame.

The stack address of the first bind value for the variable name found in the search is registered in the buffer with the variable name and the relevant FCTR counter value.

As seen in Fig. 8(b), if the buffer has an entry in the same name as an argument variable (local variable) of a function the entry is invalidated (see point (C) above).

As seen in Fig. 8(c), using as key the FCTR count value of a function being returned, entries in the buffer having matching values in the FNO are deleted (see point (D) above).

Figure 9 is a schematic block diagram of a data processing system in accordance with the first embodiment of the present invention. Operations of the system shown in Fig. 9 are as follows:—

(1) Retrieving operation.

1. Assuming that a variable name for which a bind value is to be obtained exists in a register file REG FILE,

2. The variable name in the register file is read and is compared for retrieval with entries in the NAME (VARIABLE NAME) area of the associative buffer ABM via ALU/SFT, and Y-BUS. If the variable name exists in the associative buffer the corresponding address on the stack is read from the ADRS (pointer) area, and is transferred to PTR register (the pointer register of the STACK). Thus, a wanted variable value can be obtained by reading the stack using PTR.

(2) Registration operation

3. If a variable name of which a variable value is wanted does not exist in the associative buffer ABM, address information indicating the latest point of the environment list, i.e. the retrieval starting point or header area, stored in the register file, is read and is transferred to PTR via ALU/SFT and Y-Bus. A bind value for the variable name in the register file is obtained (searched) by retrieval from environment list on the stack and PTR and FCTR are updated.

4. When the bind value is obtained from the environment list, PTR at this time indicates the variable value address on the stack. A write operation V←1, NAME area←variable name in the register file, ADRS area←current PTR, FNO area←current FCTR is carried out at this time in respect of the associative buffer. Thus, registration into the associative buffer is completed.

(3) Deleting operation incorporated into a function call

5. It is assumed that the name of a formal argument of a function to be called exists in the register file.

6. The name of the formal argument is read from the register file and is compared for retrieval with the NAME area of the associative buffer via ALU/SFT and Y-BUS. If a match exists, the validity indication bit V of the matching entry in the associative buffer is reset.

7. Naturally, FCTR shows an increment of +1 for each function call.

(4) Deleting operation incorporated into function return

8. It is assumed that a function if just going to be returned. At this time, FCTR holds the FNO value corresponding to the function to be returned.

9. Thus, the FCTR value is compared with the values in the FNO area of the associative buffer and the validity indication bits V of all entries in the buffer with matching FNO values are reset.

Figure 10 schematically illustrates the format of the associative buffer memory of a second embodiment of the present invention.

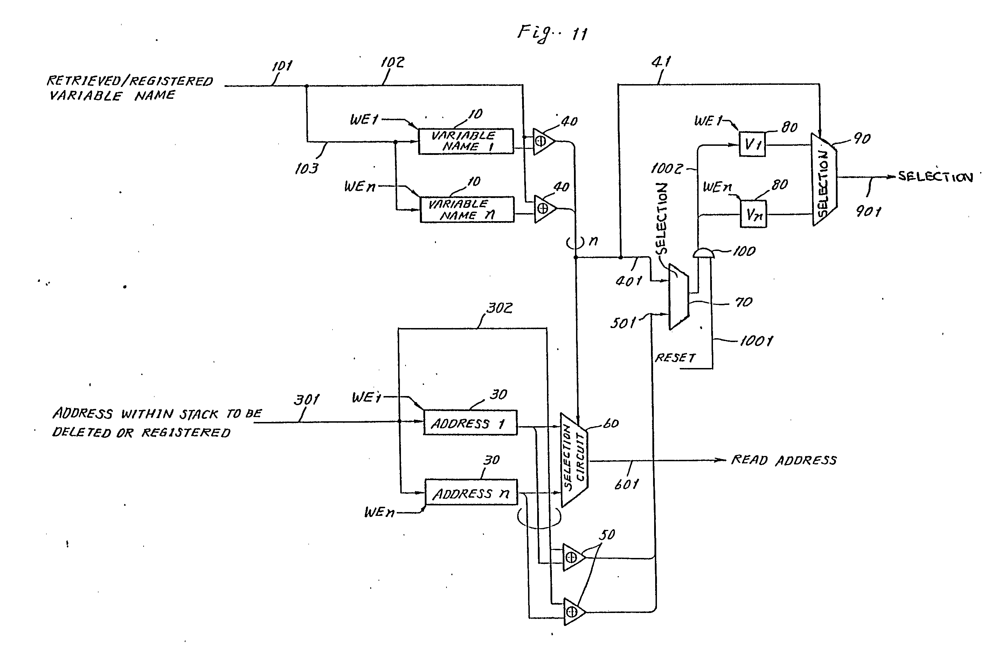

As seen in Fig. 10, in a second embodiment of the present invention, the buffer memory ABM has a variable name (NAME) area VAR, an area EA2 which contains addresses in the stack corresponding to the variable names, and a validity (EFFECTIVE INDICATION) area V. Figure 11 is a schematic block diagram of the structure of the associative buffer memory ABM in the second embodiment.

As can be seen in Fig. 11 the variable name memory 20, and an address (address in stack) memory 30 are provided, each composed of registers or cells 1 to n. The memory 10 stores variable names and memory 30 stores addresses within the stack. The ith registers (i=1, 2, ... n) of the memories 10, 30 correspond to each other, forming one word. When a global variable in the environment list of a function language oriented processor is accessed for the first time, such global variable and the corresponding address within the stack (of the bind value of the variable) are respectively registered in the memories 10, 30 of the associative buffer.

For registration in the associative buffer, a write pule signal $WE_i$ (one of $WE_i$ to $WE_n$) is activated to write a variable name VARIABLE NAME into an ith variable name cell via variable name input lines 101, 103. Simultaneously, the corresponding address in the stack is written, by activation of the write signal $WE_i$ into the ith address cell from an address input line 301.

A matching circuit 40 detects whether a given variable name VARIABLE NAME matches a variable name which has been stored previously in the variable name memory 10. When a match is detected, one of n output lines 401 is activated to control a selection circuit 60 and the content of the corresponding address cell, namely an address within the stack, is output on an output line 601. Namely, the associative buffer has the ability to read addresses within the stack by associative retrieval using variable names as keys.

In addition, in order to provide for resetting of a validity indication bit V of an entry relating to a variable name which is the same as the variable name of a formal argument of a called function, this embodiment includes a validity indication bit storing cell group 80 and a selection circuit 90.

A cell $V_i$ of the cell group 80 storing validity indication bits V is set by the write signal $WE_i$ used for writing a variable name into the ith variable name cell and an address into the ith address cell.

With a variable name used as key, when a reset signal 1001 is logic 1, a corresponding validity indication bit $V_i$ is reset via a selection circuit 70 when an ith variable name registered in the associative memory and an input variable name match in the matching circuit 40 to yield an output along output lines 1002 of an AND circuit 100.

When an address within the stack is used as the key (ADDRESS WITHIN STACK TO BE DELETED in Fig. 8), when the reset signal 1001 is logic 1, the corresponding validity indication bit $V_i$ is reset via the selection circuit 70 when the address in the ith address cell and an address input supplied via the signal lines 301 and 302 are found to match in a matching circuit 50 to yield an output along output lines 1002 of AND circuit 100. The addresses used for comparison in the matching circuit 50 are based only on a part of all the address bits specifying an address. Here, the selection circuit 70 is used for switching over from a matching signal 401 provided when variable names are used as keys to a matching signal 501 provided when addresses are used as keys.

An output of the validity indication bit cell group 80 is input to selection circuit 90 and is selected through the control of an output 41 of the matching circuit 40. Therefore, the corresponding validity indication bit where a variable name and stored variable name match is output to an output line 901 of the selection circuit 90.

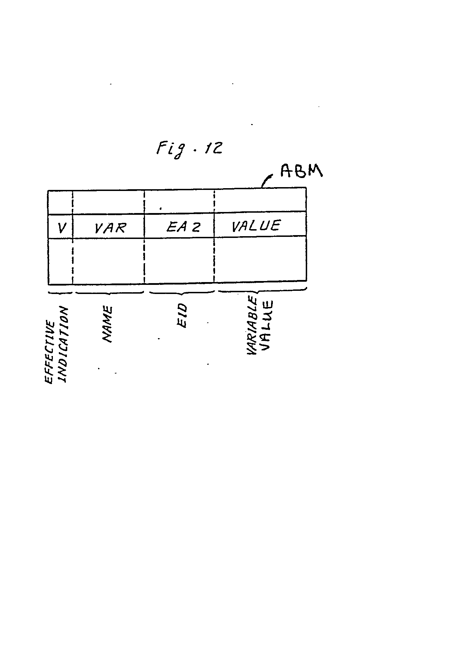

Figure 12 schematically illustrates the format of the associative buffer memory ABM of a third embodiment of the present invention. In Fig. 12, EID is a location data (Environment Identifier) area for holding data giving locations on the stack. The buffer memory also has a variable name (NAME) area VAR, a validity (EFFECTIVE INDICATION) area V, and a value (VALUE) area holding bind values (VARIABLE VALUES).

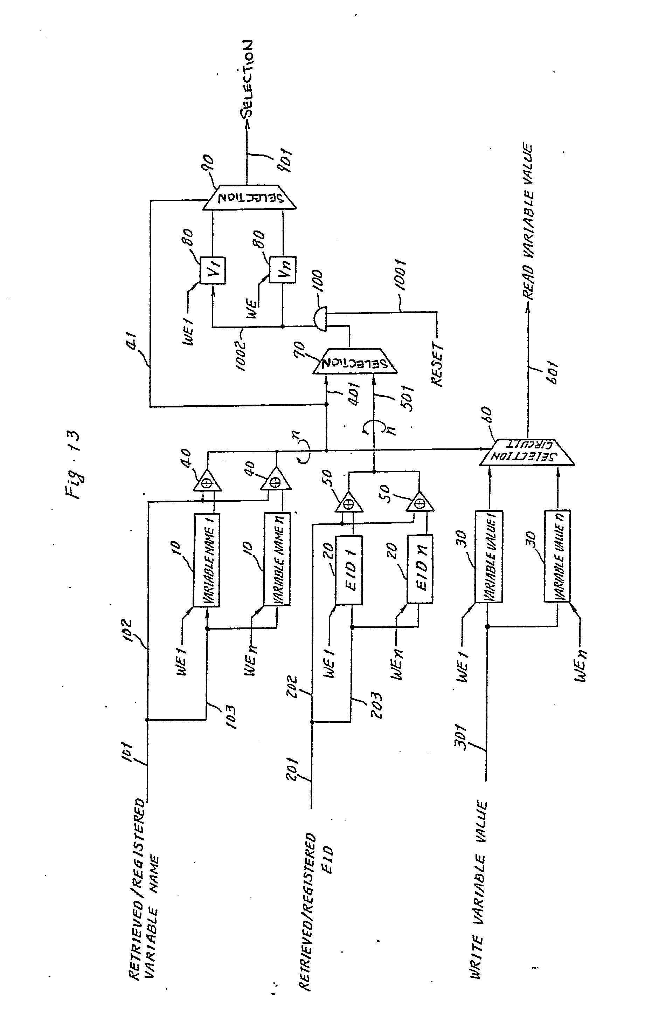

Figure 13 is a schematic block diagram of the structure of the associative buffer memory ABM of the third embodiment of the present invention. In Fig. 13, memories 10, 20, 30 are provided, each composed of registers or cells 1 to n. The memory 10 is used for storing variable names. 20 is used for storing environment identifiers. 30 stores variable values (bind values of variables). The ith (i=1, 2, . . . n) registers of the memories 10, 20, 30 correspond to one another, forming one word.

When a global variable in the environment list of the functional language oriented processor is accessed for the first time, the name of the global variable, EID data (stack location daa) and the variable value are respectively registered in the memories 10, 20, 30 of the associative buffer. For registration into the associative buffer, a write pulse signal $WE_i$ (one of $WE_1$ to $WE_n$) is activated for writing a variable name VARIABLE NAME into the ith cell of memory 10 via variable name input lines 101, 103. Simultaneously, the environment identifier EID data, which is environment location data, is written into the ith cell of the EID memory 20, by activation of the write signal $WE_i$, via input lines 201, 203. In the same way, a variable value is written into the ith cell of the value memory 30, by activation of the write signal $WE_i$, via an input line 301.

The associative buffer detects whether or not a given variable name VARIABLE NAME matches a variable name stored previously in the memory 10 in a matching circuit 40. If variable names match, one of n output lines 401 is activated, controlling a selection circuit 60. Thus, the associative buffer outputs the content of corresponding cell of value memory 30, namely the corresponding variable bind value, to the output line 601. Thus, the associative buffer has the ability to read variable values by associative retrieval using variable names as key. Moreover, since the memory 30 storing variable values is also capable of writing data, a value corresponding to variable name can be read or written. This function is necessary for referring to and altering variable values.

In order to provide for the resetting of the validity indication bit V of a buffer entry in the same variable name as a given name, using the variable name or environment identifier as key, this embodiment of the present invention includes a selection circuit 70, a validity indication bit storing cell group 80 and a selection circuit 90.

The cell $V_i$ among the cell group 80 for storing validity indication bits V is set by said write signal $WE_i$ used for writing a variable name into the ith variable name cell, EID data into the ith EID cell and a variable value into the ith value cell.

With the variable name used as key, the selection circuit 70 selects an output of the matching circuit 30 and when a reset signal 101 is logic 1, the corresponding validity indication bit $V_i$ is reset in such a timing that the variable name in the ith variable name cell and the given variable name of an input match in the matching circuit 40, using an output line 1002 of an AND circuit 100.

An output of the validity indication bit cell group is input to a selection circuit 90 and is selected under control of an output 401 of matching circuit 40. Therefore, it is output to an output 901 of the corresponding validity indication bit selection circuit 90 where the variable name and stored variable name match.

When an output 501 of a matching circuit 50 is selected by the selection circuit 70, the corresponding validity indication bit is reset when input EID data and stored EID data match.

As explained above, embodiments of the present invention provide for speeding up of access for retrieving the values of global variables by using an associative buffer in a functional language oriented processor which executes processing in accordance with the deep bind system.

**Claims**

1. A functional language oriented data processing system having a program structure in which an actual argument is bound to a corresponding formal argument of a function (F1, F2, F3—Fig. 2; F1 to F6—Fig. 5) to be called by storing as a pair the formal argument name (x, y, z—Fig. 5; NAME 1 to NAME n—Fig. 3(b)) and the actual argument (5, 10, 8—numerical values, Fig. 5; VALUE 1 to VALUE n—Fig. 3(b)) in an environment which is arranged as a first-in-last-out type stack (FILO), and having an execution mode in which a called function executes processing using as the value of a variable of the function the actual argument given by the most recently stored pair containing a formal argument name same as the name of the variable (VARIABLE NAME), and in which when a function is returned any stored pair in the environment (FILO) containing the name of a formal argument of the function is deleted from the environment (FILO), characterised in that the system includes

an associative buffer memory (ABM) operable to store entries each containing a variable name (VNA—Fig. 6; VARIABLE NAME AREA 1-WAY to VARIABLE NAME AREA n-WAY—Fig. 7; VAR—Figs. 10 and 12; VARIABLE NAME 1 to VARIABLE NAME n—Figs. 11 and 13) and data (PA—Figs. 6; VARIABLE ADDRESS—Fig. 7; EA2—Fig. 10; ADDRESS 1 to ADDRESS n—Fig. 11; VALUE—Fig. 12; VARIABLE VALUE 1 to VARIABLE VALUE n—Fig. 13) indicating the value of the variable whose name (VARIABLE NAME) is contained in the entry, accessible using variable names as key, and is operable,

(A) when a function is called, to access the buffer memory (ABM) using as key the variable name(VARIABLE NAME) of a variable of the function, the value of the variable being obtained from the buffer memory entry containing the variable name if such an entry containing the variable name is present in the buffer memory (ABM), and is operable

(B) when the function is called, if the variable name is not contained in an entry in the buffer memory (ABM), to search the environment (FILO) and to obtain the value of the variable from the most recently stored pair in the environment (FILO) which contains the variable name, and is operable,

(C) when the function is returned, to invalidate any entry in the buffer memory (ABM) containing a variable name which is the name of a formal argument of the returned function.

2. A system as claimed in claim 1, operable at (B) to provide an entry in the buffer memory (ABM) containing the variable name and data indicating the value of the variable obtained by the search.

3. A system as claimed in claim 1 or 2, operable in respect of a formal argument of the function to be called to delete any entry in the buffer memory (ABM) containing the formal argument name.

4. A system as claimed in any preceding claim wherein the data in an entry in the buffer memory (ABM) which indicates the value of the variable whose name is contained in the entry is location or address data (VARIABLE ADDRESS—Fig. 7;

ADDRESS 1 to ADDRESS n—Fig. 11) indicating the location or address in the environment (the stack) (FILO) of the value.

5. A system as claimed in claim 4, operable to perform (C) by invalidating any entry in the buffer memory (ABM) containing location or address data corresponding to the location or address in the environment (FILO) of an actual argument of any formal argument of the returned function.

6. A system as claimed in claim 4 or 5, wherein the location or address data contained in an entry in the buffer memory (ABM) is employed for random access to the environment (FILO) to obtain the value.

7. A system as claimed in any preceding claim, further including a counter (FCTR—Fig. 7) whose count value increases by one for each call of a function and decreases by one for each return of a function, wherein each entry in the buffer (ABM) also contains the count value (FA—Fig. 6; FNO AREA 1 to FNO AREA n—Fig. 7) of the counter (FCTR) which was or is effective when the variable having the variable name contained in the entry was or is referred to as a formal argument of a function when that function was or is called.

8. A system as claimed in claim 7, operable to perform (C) by invalidating any entry in the buffer memory (ABM) containing a count value corresponding to the count value effective on calling of the function to be returned.

9. A system as claimed in claim 1, 2 or 3, or claim 7 or 8 when read as appended to claim 1, 2 or 3, wherein each entry in the buffer contains as data indicating the value of the variable whose name is contained in the entry the value itself.

10. A system as claimed in claim 9, wherein, when a value of a variable is altered, the value contained in the most recently stored pair in the environment containing the variable name is altered and simultaneously, if an entry in the buffer memory contains the variable name, the value in that entry is also altered.

**Patentansprüche**

1. An einer funktionalen Sprache orientiertes Datenverarbeitungssystem, mit einer Programmstruktur, bei welcher ein tatsächliches Argument an ein entsprechendes formales Argument einer Funktion (F1, F2, F3—Fig. 2; F1 bis F6—Fig. 5) gebunden wird, um durch Speichern als ein Paar aus dem formalen Argumentnamen (x, y, z—Fig. 5; NAME 1 bis NAME n—Fig. 3(b)) und dem tasächlichen Argument (5, 10, 8—numerische Werte, Fig. 5; VALUE 1 bis VALUE n—Fig. 3(b)) in einer Umgebung aufgerufen zu werden, in welcher es als ein Stapel vom First-in-last-out-Typ (FILO) angeordnet ist, und welches einen Ausführungsmodus hat, in welchem eine aufgerufene Funktion die Verarbeitung ausführt, wobei als der Wert einer Variablen der Funktion das tatsächliche Argument verwendet wird, das durch das zuletzt gespeicherte Paar gegeben ist, welches einen formalen Argumentnamen enthält, der derselbe wie der Name der Variablen (VARIABLE NAME) ist, und bei welchem dann, wenn eine Funktion retourniert wird, irgendein in der Umgebung (FILO) gespeichertes Paar, welches den Namen eines formalen Arguments der Funktion enthält aus der Umgebung (FILO) gelöscht wird, dadurch gekennzeichnet, daß das System

einen assoziativen Pufferspeicher (ABM) umfaßt, der Einträge speichern kann, die jeweils einen Variablennamen (VNA—Fig. 6; VARIABLE NAME AREAS 1-WAY bis VARIABLE NAME AREA n-WAY—Fig. 7; VAR—Figuren 10 und 12; VARIABLE NAME 1 bis VARIABLE NAME n-Figuren 11 und 13), und Daten (PA—Figuren 6; VARIABLE ADDRESS—Fig. 7; EA2—Fig. 10; ADDRESS 1 bis ADDRESS n—Fig. 11; VALUE—Fig. 12; VARIABLE VALUE 1 bis VARAIBLE VALUE n-Fig. 13) enthält, die den Wert der Variablen anzeigen, deren Name (VARIABLE NAME) in dem Eintrag enthalten ist, der unter Verwendung der Namen der Variablen als Schlüssel zugänglich ist, unde betreibbar ist,

(A) wenn eine Funktion aufgerufen wird, um zu dem Pufferspeicher (ABM) zuzugreifen, unter Verwendung des Variablennamens (VARIABLE NAME) einer Variablen der Funktion als Schlüssel, wobei der Wert der Variablen von dem Pufferspeichereintrag erhalten wird, der den Variablennamen enthält, falls solche ein Eintrag, der den Namen der Variablen enthält, in dem Pufferspeicher (ABM) enthalten ist,

und betreibbar ist,

(B) wenn die Funktion aufgerufen wird, falls der Name der Variablen nicht in irgendeinem Eintrag in dem Pufferspeicher (ABM) enthalten ist, um die Umgebung (FILO) zu durchsuchen und um den Wert der Variablen von dem zuletzt in der Umgebund (FILO) gespeicherten Paar zu erhalten, welches den Namen der Variablen enthält,

und betreibbar ist,

(C) wenn die Funktion retourniert wird, um irgendeinen Eintrag in dem Pufferspeicher (ABM), der einen Variablennamen enthält, welcher der Name eines formalen Arguments der retournierten Funktion ist, umgültig zu machen.

2. System nach Anspruch 1, welches bei (B) betriebbar ist, um einen Eintrag in dem Pufferspeicher (ABM) vorzusehen, der den Variablennamen und Daten enthält, die den Wert der Variablen angeben, die durch die Suche ermittelt wird.

3. System nach Anspruch 1 oder 2, welches in Bezug auf ein formales Argument der Funktion betreibbar ist, die aufgerufen werden soll, um irgendeinen Eintrag in dem Pufferspeicher (ABM) zu löschen, der den Formalen Argumentnamen enthält.

4. System nach einem der vorhergehenden Ansprüche, bei welchem die Daten in einem Eintrag in dem Pufferspeicher (ABM), welcher den Wert der Variablen angibt, deren Name in dem Eintrag enthalten ist, Ortsoder Adressendaten (VARIABLE ADDRESS—Fig. 7; ADDRESS 1 bis ADDRESS n—Fig. 11) sind, welche den Ort oder die Adresse in der Umgebung (dem Stapel (FILO) des Wertes angeben.

5. Systen nach Anspruch 4, welches betreibbar ist, um (C) auszuführen, durch Ungültigmachen irgendeines Eintrags in dem Pufferspeicher (ABM), welcher Ortsoder Adressdaten enthält, die dem Ort oder der Adresse in der Umgebung (FILO) eines tatsächlichen Argumentes oder irgendeines formalen Argumentes der retournierten Funktion enthalten.

6. System nach Anspruch 4 oder 5, bei welchem die Orts- oder Adressdaten, die in einem Eintrag in einem Pufferspeicher (ABM) enthalten sind, für den wahlfreien Zugriff zu der Umgebung (FILO) verwendet werden, um den Wert zu erhalten.

7. System nach einem der vorhergehenden Ansprüche, ferner mit einem Zählen (PCTR—Fig. 7), dessen Zählwert für jeden Aufruf einer Funktion um einen Wert anwächst und bei jeder Retournierung einer Funktion um einen Zählwert abnimmt, wobei jeder Eintrag in dem Puffer (ABM) auch den Zählwert (FA—Fig. 6; FNO AREA 1 bis FNO AREA n—Fig. 7) des Zählers (FCTR) enthält, der effektiv war oder ist, wenn die Variable, die den Variablennamen hat, der in dem Eintrag als formales Argument einer Funktion angegeben war oder ist, wenn die Funktion aufgerufen wurde oder wird.

8. System nach Anspruch 7, welches betreibbar ist, um (C) durch Ungültigmachen irgendeines Eintrags in dem Pufferspeicher (ABM), welcher einen Zählwert enthält, der dem effektiven Zählwert beim Aufruf der zu retournierenden Funktion entspricht auszuführen.

9. System nach Anspruch 1, 2 oder 3 oder Anspruch 7 oder 8, in Verbindung mit Ansprüchen 1, 2 oder 3, bei welchem jeder Eintrag in dem Puffer als Daten, die den Wert der Variablen angeben, deren Name in dem Eintrag enthalten ist, den Wert selber enthält.

10. System nach Anspruch 9, bei welchem dann, wenn ein Wert einer Variablen geändert wird, der Wert, der in dem zuletzt in der Umgebung gespeicherten Paar enthalten ist, welches den Variablennamen enthält, geändert wird, und gleichzeitig, falls ein Eintrag in dem Pufferspeicher den Variablennamen enthält, der Wert in dem Eintrag ebenfalls geändert wird.

## Revendications

1. Système de traitement de données orienté sur un lang age fonctionnel, ayant une structure de programmes dans laquelle un argument réel est lié à un argument formel correspondant d'une fonction (F1, F2, F3—Fig. 2; F1 à F6—Fig. 5) à appeler en mémorisant comme une paire le nom d'argument formel (X, Y, Z—Fig. 5); NOM 1 à NOM n—Fig. 3(b)) et l'argument réel (5, 10, 8—valeurs numériques, Fig. 5; Valeur 1 à Valeur n—Fig. 3(b)) dans un environnement qui est agencé comme une pile du type au premier entrée, dernier sortie (FILO) et ayant un mode d'exécution dans lequel une fonction appelée exécute un traitement et utilisant comme la valeur d'une variable de la fonction, l'argument réel donné par la paire la plus récemment mémorisée contenant un nom d'argument formel semblable au nom de la variable (NOM DE VARIABLE) et dans lequel lorsqu'une fonction est retournée, une paire mémorisée dans l'environnement (FILO) contenant le nom d'un argument formel de la fonction est effacée de l'environnement (FILO), système caractérisé en ce qu'il comporte une mémoire tampon associative (ABM) ayant pour fonction de mémoriser des entrées contenant chacune un nom de variable (VNA—Fig. 6; ZONE DE NOM DE VARIABLE, 1 VOIE vers ZONE DE NOM DE VARIABLE, N-VOIES—Fig. 7; VAR—Fig. 10 et 12; NOM DE VARIABLE 1 à NOM DE VARIABLE n—Fig. 11 et 13) est données (PA Fig. 6; ADRESSE DE VARIABLE—Fig. 7; EA2—Fig. 10; ADRESSE 1 à ADRESSE n—Fig. 11; VALEUR—Fig. 12; VALEUR DE VARIABLE 1 à VALEUR DE VARIABLE n—Fig. 13) indiquant la valeur de la variable dont le nom (NOM DE VARIABLE) se trouve dans l'entrée, accessible en utilisant des noms de variables comme clé, et ayant pour fonction: a) lorsqu'une fonction est appelée, d'accéder à la mémoire tampon (ABM) en utilisant comme clé le nom de variable (NOM DE VARIABLE) d'une variable de la fonction, la valeur de la variable étant obtenua dans l'entrée de mémoire tampon contenant le nom de variable si cette entrée contenant le nom de variable est présente dans la mémoire tampon (ABM), et ayant pour fonction (B) lorsque la fonction est appelée, si le nom de variable ne se trouve dans aucune entrée de la mémoire tampon (ABM) de rechercher l'environnement (FILO) et d'obtenir la valeur de la variable depuis la paire la plus récemment mémorisée dans l'environnement (FILO) qui contient le nom de variable, et ayant aussi pour fonction: (c) quand la fonction est retournée, d'invalider une entrée dans la mémoire tampon (ABM) contenant un nom de variabler qui est le nom d'un argument formel de la fonction retournée.

2. Système selon la revendication 1, ayant pour fonction en (B) de produire une entrée dans la mémoire tampon (ABM) contenant le nom de variable et des données indiquant la valeur de la variable obtenue par la recherche.

3. Système selon la revendication 1 ou 2, ayant pour fonction, par rapport à un argument formel de la fonction à appeler, d'effacer une entrée dans la mémoire tampon (ABM) contenant le nom de l'argument formel.

4. Système selon l'une quelconque des revendications précédentes, dans lequel les données dans une entrée de la mémoire tampon (ABM) indiquant la valeur de la variable dont le nom est contenu dans l'entrée sont des données de position ou d'adresse (ADRESSE DE VARIABLE—Fig. 7; ADRESSE 1 à ADRESSE n—Fig. 11) indiquant la position ou l'adresse dans l'environnement (la pile (FILO)) de la valeur.

5. Système selon la revendication 4, ayant pour fonction d'exécuter (C) par invalidation d'une entrée dans la mémoire tampon (ABM) contenant des données de position ou d'adresse correspondant à la position ou l'adresse dans l'environnement (FILO) d'un argument réel d'un argument formel de la fonction retournée.

6. Système selon la revendication 4 ou 5, dans lequel les données de position ou d'adresse que contient une entrée dans la mémoire tampon (ABM) sont utilisées pour un accès direct à l'environnement (FILO) pour obtenir la valeur.

7. Système selon l'une quelconque des revendications précédentes, comportant en outre un compteur (PCTR—Fig. 7) dont la valeur de comptage augmente d'une unité pour chaque appel d'une fonction et diminue d'une unité pour chaque retour d'une fonction, dans lequel chaque entrée dans le tampon (ABM) contient également la valeur de comptage (FA—Fig. 6; ZONE FNO1 à ZONE FNOn—Fig. 7) du compteur (FCTR) qui a été ou qui est effective quand la variable ayant le nom de variable que contient l'entrée a été ou est referée comme un argument formel de la fonction quand cette fonction a été ou est appelée.

8. Système selon la revendication 7, fonctionnant pour exécuter (C) par invalidation d'une entrée dans la mémoire tampon (ABM) contenant une valeur de comptage correspondant à la valeur de comptage effective à l'appel de la fonction à retourner.

9. Système selon la revendication 1, 2 ou 3, ou la revendication 7 ou 8 considérée comme annexée à la revendication 1, 2 ou 3, dans lequel chaque entrée dans le tampon contient, comme des données indiquant la valeur de la variable dont le nom se trouve dans l'entrée, la valeur elle-même.

10. Système selon la revendication 9, dans lequel lorsqu'une valeur d'une variable est modifiée, la valeur que contient la paire la plus récémment mémorisée dans l'environnement contenant le nom de variable est modifiée et simultanément, si une entrée dans la mémoire tampon contient le nom de variable, la valeur de cette entrée est également modifiée.

## Fig. 1

### (A) TREE STRUCTURE

### (B) EXPRESSION OF (A) BY BINARY TREE STRUCTURE

### (C) CORRESPONDING TO THE BINARY TREE OF BINARY TREE LIST (B)

Fig. 2

FUNCTION F1 — CALL 1 → FUNCTION F2 — CALL 2 → FUNCTION F3

FUNCTION F1 ← RETURN 1 — FUNCTION F2 ← RETURN 2 — FUNCTION F3

F1
F2
F3

Fig. 3(a)

RETRIEVE STARTING POINT

NAME n    VALUE n    NAME n-1    VALUE n-1    NAME 1    VALUE 1

⟶ OLD IN TIMING

A
B

| NAME n | VALUE n | NAME n-1 | VALUE n-1 | —— | NAME 1 | VALUE 1 |

FILO

Fig. 3(b)

# 0 069 525

Fig 4

(A)                    (B)                    (C)

Fig. 5

Fig. 6

0 069 525

Fig·7

VARIABLE NAME

101

103

VARIABLE NAME AREA 1-WAY

40

401

DETECTION 1

10

VARIABLE NAME AREA n-WAY

DETECTION n

21

FCTR

210

201

203

FNO AREA 1

50

501

90

VALID UPDATE CIRCUIT

V1

V2

Vn

20

2

:

n

80

n

301

POINTER AREA 1-WAY

60

SELECTION CIRCUIT

VARIABLE ADDRESS

STACK OR ENVIRONMENT LIST

30

POINTER AREA n-WAY

601

n-WAY REPLACE LOGIC

100

5

## Fig. 8 (a)

```
┌─────────────────────────────────────┐
│ ASSOCIATIVE RETRIEVAL OF BUFFER      │
│ USING VARIABLE NAME AS THE KEY       │
└─────────────────────────────────────┘
                 │
                 ▼
        ╱─────────────────────╲
       ╱ THERE IS AN ITEM OF WHICH ╲──────────┐
       ╲ VARIABLE NAME MATCHES ?    ╱          │
        ╲─────────────────────╱               │
                 │                             │
                 ▼                             ▼
┌──────────────────────────────┐      ┌──────────────┐
│ A BIND VALUE OF VARIABLE NAME IS │   │              │
│ SEARCHED WHILE SEARCHING BACK    │   │  LRU UPDATE  │
│ FROM THE NEW ENVIRONMENT LIST TO │   │              │
│ THE OLD ONE.                     │   └──────────────┘
└──────────────────────────────┘              │
                 │                             │
                 ▼                             │
┌──────────────────────────────┐              │
│ FCTR VALUE IS REDUCED BY ONE     │           │
│ FOR EACH BACKWARD SEARCH OF FRAME.│          │
└──────────────────────────────┘              │
                 │                             │
                 ▼                             │
┌────────────────────────────────────────────┐│
│ OBTAIN THE BIND VALUE OF VARIABLE FOUND AT FIRST.│
│ THIS IS THE WANTED VALUE. REGISTER IT TO SAID BUFFER│
│ MEMORY IN THE FORM OF A PAIR OF THE ADDRESS.│
│ VARIABLE NAME AND FCTR AT THIS TIME ON      │
│ THE ENVIRONMENT LIST.                       │
└────────────────────────────────────────────┘
                 │                             │
                 └──────────────┬──────────────┘
                                ▼
            ┌────────────────────────────────────┐
            │ OBTAIN A VARIABLE VALUE FROM THE     │
            │ ENVIRONMENT LIST USING AN ADDRESS ON │
            │ THE ENVIRONMENT LIST OBTAINED.       │
            └────────────────────────────────────┘
```

Fig. 8 (b)

```
┌─────────────────────────────────────────┐
│ ASSOCIATIVE RETRIEVAL OF BUFFER USING    │
│ ARGUMENT VARIABLE NAME AS THE KEY        │
└─────────────────────────────────────────┘
                    │
                    ▼
        ┌───────────────────────────┐
        │ THERE IS AN ITEM OF WHICH │
        │ VARIABLE NAME AREA        │
        │ MATCHES ?                 │
        └───────────────────────────┘
                    │
                    ▼
    ┌───────────────────────────────────┐
    │ RESET THE EFFECTIVE INDICATION    │
    │ BIT V OF SUCH ITEM.               │
    └───────────────────────────────────┘
```

Fig. 8 (C)

```
┌──────────────────────────────────────────────┐
│ ASSOCIATIVE RETRIEVAL OF BUFFER USING THE     │
│ CURRENT FCTR VALUE (CORRESPONDING TO A        │
│ FUNCTION TO BE RETURNED NOW) AS THE KEY       │
└──────────────────────────────────────────────┘
                    │
                    ▼
┌──────────────────────────────────────────────┐
│ RESST THE EFFECTIVE INDICATION BIT OF ITEM    │
│ OF WHICH FNO AREA MATCHES THE FCTR VALUE.     │
└──────────────────────────────────────────────┘
```

7

Fig. 9

Fig. 10

Fig. 11

Fig. 12

ABM

| V | VAR | EA 2 | VALUE |
|---|-----|------|-------|

EFFECTIVE INDICATION

NAME

EID

VARIABLE VALUE

Fig · 13